# EUROPEAN PATENT SPECIFICATION

(11) **EP 3 026 851 B1**
(45) Date of publication and mention of the grant of the patent: **23.08.2017**
(21) Application number: 14306899.7
(22) Date of filing: 27.11.2014
(51) Int. Cl.: H04L 12/721, H04L 12/715, H04L 12/803, H04L 12/725, H04L 12/751, H04L 12/743, H04L 12/747

(54) **APPARATUS, NETWORK GATEWAY, METHOD AND COMPUTER PROGRAM FOR PROVIDING INFORMATION RELATED TO A SPECIFIC ROUTE TO A SERVICE IN A NETWORK**
VORRICHTUNG, NETZÜBERGANGSEINRICHTUNG, VERFAHREN UND COMPUTERPROGRAMM ZUR BEREITSTELLUNG VON INFORMATIONEN IM ZUSAMMENHANG MIT EINER BESTIMMTEN ROUTE ZU EINEM DIENST IN EINEM NETZ
APPAREIL, PASSERELLE DE RÉSEAU, PROCÉDÉ ET PROGRAMME INFORMATIQUE POUR FOURNIR DES INFORMATIONS RELATIVES À UN ITINÉRAIRE SPÉCIFIQUE À UN SERVICE DANS UN RÉSEAU

(43) Date of publication of application: 01.06.2016
(73) Proprietor: ALCATEL LUCENT, 92100 Boulogne-Billancourt (FR)
(72) Inventor: Rimac, Ivica, 70435 Stuttgart (DE)
(74) Representative: Wetzel, Emmanuelle

(56) References cited:
- Michael Vrable ET AL: "Scalability, fidelity, and containment in the potemkin virtual honeyfarm", ACM SIGOPS Operating Systems Review, 20 October 2005 (2005-10-20), pages 148-162, XP055092625, DOI: 10.1145/1095809.1095825 Retrieved from the Internet: URL:http://portal.acm.org/citation.cfm?id= 1095825

## Description

### Technical Field

Embodiments relate to an apparatus, a network gateway, a method and a computer program for providing information related to a specific route to a service in a network, based on a service request from one or more service clients, particularly, but not exclusively, based on information related to current and previous assignments of specific routes to source identifiers.

### Background

This section introduces aspects that may be helpful in facilitating a better understanding of the invention(s). Accordingly, the statements of this section are to be read in this light and are not to be understood as admissions about what is in the prior art or what is not in the prior art.

Traffic in wired and wireless networks is steadily increasing. This may be due to an increasing number of clients in the networks, new types of services being offered and quality of existing services being increased. In consequence, network operators may need to find approaches to deal with the increased demand. One such approach may be the use of load balancing or traffic spreading to distribute the workload across multiple resources.

Traffic spreading, or network load balancing, may be applied on network resources, wherein traffic may be routed on different connections to the same destination, to avoid congestion on single resources. Protocols, such as Equal-Cost MultiPath (ECMP), may be used to spread the traffic on a number of resources.

Load balancing may also be used on servers providing the service. In cloud services, virtual servers, which may run on low-level virtualization hypervisors, might be dynamically activated or deactivated to deal with additional requests. The servers might then either be accessed via Network Address Translation (NAT), in which a network gateway may choose the appropriate destination of a request to a generic address, or the servers might be accessible via public Internet Protocol (IP) addresses, which might be known to a Domain Name System (DNS) server.

In load balancing, in some cases, it may be important to handle all requests on the same resource (persistence, flow affinity). For example, servers providing the same service may store information related to a session between a client and a server locally, so it cannot be accessed from other servers. Equally, if packets are transmitted using different connections, the order of the packets arriving at the client may cause the client to require frequent retransmissions.

More information can be found in:
Michael Vrable ET AL: "Scalability, fidelity, and containment in the potemkin virtual honeyfarm", ACM SIGOPS Operating Systems Review, 20 October 2005 (2005-10-20), pages 148-162, XP055092625.

### Summary of illustrative Embodiments

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide an apparatus, a network gateway, a method and a computer program for providing information related to a specific route to a service in a network, based on a service request from one or more service clients. Operators of networks comprising servers providing services may often route service requests to a plurality of servers, over a plurality of network connections. To achieve persistence, or flow affinity, of packets belonging to the same logical connection, operators may choose to forward packets belonging to the same logical connection to the same server and via the same network connection(s).

Embodiments provide apparatuses, methods and computer programs according to the independent claims.

Embodiments provide an apparatus for providing information related to a specific route to a service in a network, based on a service request from one or more service clients. The apparatus comprises a computation module to provide information related to a source identifier, based on information related to the service request of at least one of the one or more service clients.

The apparatus further comprises a first routing module to store information related to a first assignment of a first plurality of specific routes to services to a first plurality of source identifiers, based on information related to a first plurality of previous assignments between the first plurality of specific routes to services to the first plurality of source identifiers and a second routing module to store information related a second assignment of a second plurality of specific routes to services to a second plurality of source identifiers, based on information related to a second plurality of current assignments between the second plurality of specific routes to services to the second plurality of source identifiers. The apparatus further comprises a control module to control the first and second routing modules. The control module is further configured to obtain, from the first routing module, the information related to the specific route to the service, if the first routing module comprises the information related to the specific route to the service, and, in case the first routing module does not comprise the information related to the specific route to the service, to obtain, from the second routing module, the information related to the specific route to the service, if the second routing module comprises the information related to the specific route to the service. Storing and using the information related to a specific route to a service, based on the source identifier, may enable a network gateway to forward requests belonging to a source identifier to the same server, via the same network resources.

In some embodiments, the control module may further be configured to, if the first and second routing modules do not comprise the information related to the specific route to the service, provide the second routing module with information related to an assignment of the specific route to the service based on the information related to the source identifier. If a source identifier is previously unknown, or has been removed, a new assignment between source identifier and specific route may be added, to be used for subsequent requests.

In at least some embodiments, a state of the network may comprise at least one element of the group of information related to a network topology of the network, information related to an availability/unavailability of servers providing the service, or information related to a service capacity of servers providing the service. The information related to the second plurality of the current assignments may be based on information related to a current state of the network, and the information related to the first plurality of the previous assignments may be based on information related to one or more previous states of the network. The first routing module may comprise information related to a specific route to a service, based on previous states of the network, so existing connections may be routed on the same specific routes, even when new connections may use different specific routes.

In various embodiments, the information related to the specific route to the service may comprise information related to at least one element of the group of one or more IP addresses of a server providing the service, one or more IP addresses of one or more gateways in the network, one or more transmission channels, or one or more ports of a server providing the service. In some embodiments, the first plurality of specific routes and the second plurality of specific routes may partly overlap. In embodiments, various routes to a server providing the service may be available, so the information related to a specific route may comprise specific information related to routes and/or gateways, which may enable that packets may use the same route for the same source identifier.

In some embodiments, the information related to the specific route to the service may be based on at least one element of the group of information related to a location of a server providing the service, information related to a network topography of the network comprising at least one server providing the service, information related to a set of possible routes to a service, information related to a set of network loads of at least one route to a service, information related to a set of processing loads of at least one server providing the service. Using a plurality of information to determine an assignment of a specific route to a service to a source identifier, embodiments may increase an average quality of service for the service clients.

In at least some embodiments, the information related to the source identifier may comprise information related to at least one element of the group of a source address, a hash value of a source address, a device identifier, a hash value of a device identifier, a client configuration, or a maximum transmission capacity. In some embodiments, a specific source identifier may be either comprised in the first plurality of source identifiers or the second plurality of source identifiers. Using additional information for the source identifier, embodiments may distinguish concurrent connections of one client to different servers providing services.

In some embodiments, the control module may further be configured to invalidate and/or remove an information related to a first and/or second assignment from the first or second routing modules if a last service request associated with the source identifier is received. Clearing obsolete information may decrease the storage required for storing the information related to a first and second assignment, and may lead to assignments predominately being based on a current state of the network.

In some embodiments, the control module may further be configured to delay the invalidation and/or removing of the information related to a first and/or second assignment for a time interval after the last service request associated with the source identifier is received. Delaying the removing and/or invalidation may enable persistence in case the network connection of the client is temporarily lost, or if the requesting of content is paused.

In at least some embodiments, the control module may be further configured to transfer the information related to the second assignment from the second routing module to the first routing module, which may preserve the information related to the second assignment in case new assignments related to a current state of the network are being determined.

In various embodiments, the control module may be further configured to transfer the information related to the second assignment from the second routing module to the first routing module in case the state of the network changes, which may preserve the information related to the second assignment when the state of the network changes.

In various embodiments, the control module may be further configured to clear the information related to the second assignment from the second routing module in case the state of the network changes. Clearing the information related to the second assignment may result in the second routing module only containing information based on information related to a current state of the network.

Embodiments further provide a network gateway in a network comprising an apparatus for providing information related to a specific route to a service in a network as described above, wherein the network gateway is configured to forward the service request from the one or more service clients to a server providing the service based on the information related to the specific route to a service. A network gateway comprising the apparatus may use the information related to the specific route to a service to forward requests from the service clients.

In some embodiments, the network gateway may be further configured to modify the request from the one or more service clients, based on the information related to a specific route to a service. In some embodiments, the network gateway may provide network address translation based on the information related to a specific route to a service.

Embodiments further provide a method for providing information related to a specific route to a service in a network, based on a service request from one or more service clients. The method comprises providing information related to a source identifier, based on information related to the service request of at least one of the one or more service clients. The method further comprises storing information related to a first assignment of a first plurality of specific routes to services to a first plurality of source identifiers, based on information related to a first plurality of previous assignments between the first plurality of specific routes to services to the first plurality of source identifiers and storing information related a second assignment of a second plurality of specific routes to services to a second plurality of source identifiers, based on information related to a second plurality of current assignments between the second plurality of specific routes to services to the second plurality of source identifiers. The method further comprises controlling the first and second routing modules, obtaining, from the first routing module, the information related to the specific route to the service, if the first routing module comprises the information related to the specific route to the service and obtaining, in case the first routing module does not comprise the information related to the specific route to the service, from the second routing module, the information related to the specific route to the service, if the second routing module comprises the information related to the specific route to the service.

Embodiments further provide a computer program having a program code for performing the above method, when the computer program is executed on a computer, a processor, or a programmable hardware component. A further embodiment is a computer readable storage medium storing instructions which, when executed by a computer, processor, or programmable hardware component, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which:
Fig. 1 illustrates a block diagram of an embodiment of an apparatus for providing a specific route to a service in a network;
Fig. 2 illustrates a block diagram of an embodiment of a network gateway comprising an apparatus for providing a specific route to a service in a network;
Fig. 3 illustrates a block diagram of an embodiment of a cloud service in a data center before and after a change in the state of a network;
Fig. 4 illustrates a diagram of an embodiment before a scale-out event;
Fig 5 illustrates a diagram of an embodiment during a scale-out event;
Fig. 6 illustrates a diagram of an embodiment after a scale-out event; and
Fig. 7 illustrates a block diagram of a flow chart of an embodiment of a method for providing a specific route to a service in a network.

### Description of Embodiments

Various example embodiments will now be described more fully with reference to the accompanying drawings in which some example embodiments are illustrated. In the figures, the thicknesses of lines, layers or regions may be exaggerated for clarity. Optional components are illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof. Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Network-based traffic spreading or load balancing may be seen as a crucial function to increase operational efficiency by leveraging multiplicity. In the networking context, multipath routing may achieve substantial increases in bandwidth by load-balancing traffic over multiple available paths to a destination. Similarly, being able to spread flows over multiple instances of a single virtualized service in a data center may increases agility and operational efficiency in the cloud. In both examples, a forwarding may have several alternative paths to the same (virtual) destination and might use some method to choose which of the alternatives should be used for a given data packet.

Such a method may provide for a fast implementation, i.e., the amount of additional computation required to forward a packet of a flow should be small. A method may also provide for flow affinity, i.e., ensure that packets for the same flow consistently use the same path to avoid problems higher in the stack (e.g., TCP-issues with variable latencies and variable path MTU). Flow-affinity may be considered important also in a cloud environment, where the destination endpoint identifier may be virtual, i.e., there exist potentially multiple alternative choice for further processing of a packet in the forwarder for the same virtual address each eventually mapping to another virtual machine. Moreover, since alternatives may be added and deleted, it may be desirable to minimize the number of active flows affected by these events. Such events might originate in the network (e.g., link failures) or in the cloud on the service level (e.g., scale-in/out, VM migration).

Existing approaches may use Equal-Cost MultiPath (ECMP), which may be supported in today's routing protocols such as Open Shortest Path First (OSPF) and Intermediate System to Intermediate System (ISIS). If multiple equal-cost paths to the same destination exist, ECMP routing might discover these and may use them to balance load among the "redundant" routes. An ECMP-supporting forwarder may calculate a hash over the subset of packet header fields that identify a flow and may choose the next-hop based on the hash value. While the hashing schemes used in existing approaches may provide for fast implementations and flow-affinity in static settings, they may cause a disruption of active flows when changes in the network or in the cloud infrastructure occur. Approaches that use modulo-N hashing, which may allow for a very fast implementation, may suffer from disruption of (*N* - 1)/*N* of the active flows whenever an alternative path is added or removed to/from the set (cardinality N). Other approaches may use highest random weight (HRW), which might reduce the fraction of affected flows to 1/*N*, but may be considered to be approximately N times as computationally expensive as modulo-N hashing.

Some alternative approaches may suggest leveraging the functionality of switches and routers to keep per-flow rules (e.g. policy-based routing (PBR)). However, since forwarders may typically provide only very limited amount of fast memory for that purpose, approaches might not be scalable in terms of supported number of flows.

Embodiments may use hash-based mapping and extend it by a lookup module implemented in fast memory to maintain exceptions to the hash-based mapping. Therefore, embodiments may maintain a compact representation of flows that were active before the last change of paths and are still active. Embodiments may use variants of Bloom filters for the compact representation, which may allow for space-efficient implementation in memory and fast lookup.

When making forwarding decisions for a packet flow, in embodiments, a forwarder, via a control module, may first check membership of a flow in the exception entries. If the flow is comprised in the exceptions, the forwarder may chooses the path according to the exception table. If the flow is not comprised in the exception module, the forwarder may use a default procedure, i.e., it may make a choice based on an ECMP hash function.

In contrast to Software Defined Networking (SDN)-based approaches that may require an additional matching entry for every flow, at least some embodiments may require only one additional field per existing multipath entry.

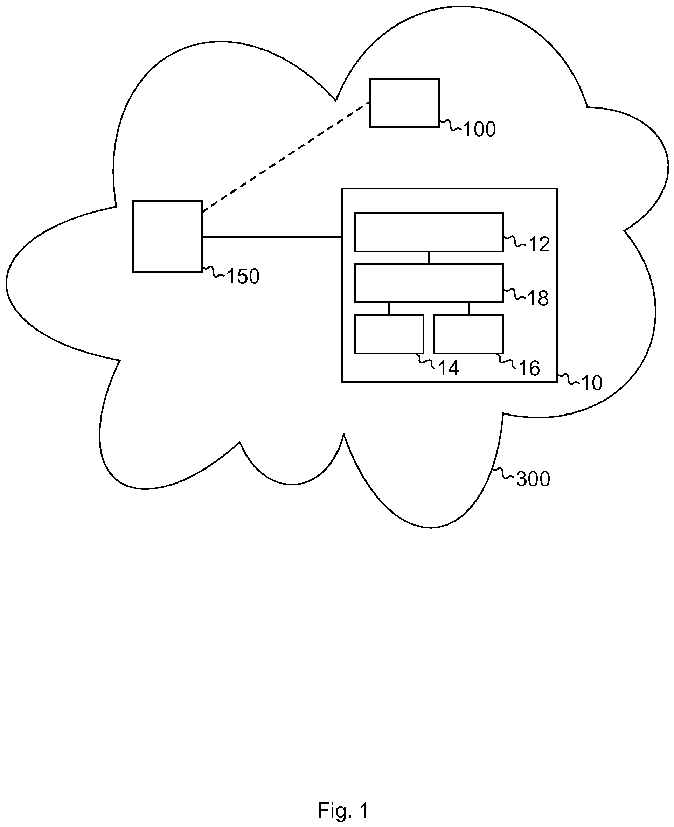

In the following, some embodiments for an apparatus, a network gateway, a method and a computer program for providing information related to a specific route to a service in a network, based on a service request from one or more service clients will be described. Fig. 1 illustrates a block diagram of an embodiment of an apparatus 10 comprising a computation module 12, a first routing module 14, a second routing module 16, and a control module 18. Fig. 1 further shows one or more service clients 150, and a service 100. The apparatus 10 is coupled to the one or more service clients 150. The control module 18 is coupled to the computation module 12, and to the first and second routing modules 14, 16. The one or more service clients 150 request a service 100, as indicated by a broken line.

The apparatus 10 is configured to provide information related to a specific route to a service 100 in a network 300, based on a service request from one or more service clients 150.

In some embodiments, the information related to the specific route to the service 100 may comprise information related to at least one element of the group of one or more Internet Protocol, IP, addresses of a server providing the service 100, one or more IP addresses of one or more gateways in the network 300, one or more transmission channels, or one or more ports of a server providing the service 100.

In various embodiments, the information related to the specific route to the service 100 may be based on at least one element of the group of information related to a location of a server providing the service 100, information related to a network topography of the network 300 comprising at least one server providing the service 100, information related to a set of possible routes to a service 100, information related to a set of network loads of at least one route to a service 100, information related to a set of processing loads of at least one server providing the service 100.

The apparatus 10 comprises a computation module 12 to provide information related to a source identifier, based on information related to the service request of at least one of the one or more service clients 150.

In various embodiments, the information related to the source identifier may comprise information related to at least one element of the group of a source address, a hash value of a source address, a device identifier, a hash value of a device identifier, a client configuration, a maximum transmission capacity.

In embodiments the computation module 12 may be implemented using one or more processing units, one or more processing devices, any means for processing, such as a processor, a computer or a programmable hardware component being operable with accordingly adapted software. In other words, the described functions of the control module 12 may as well be implemented in software, which is then executed on one or more programmable hardware components. Such hardware components may comprise a general purpose processor, a Digital Signal Processor (DSP), a micro-controller, etc. In embodiments, the computation module 12 may comprise a hashing function, to provide a hash over elements of the service request, such as, for example, a source address, an application type, a client identifier etc.

The apparatus 10 further comprises a first routing module 14 to store information related to a first assignment of a first plurality of specific routes to services to a first plurality of source identifiers, based on information related to a first plurality of previous assignments between the first plurality of specific routes to services to the first plurality of source identifiers;

The apparatus 10 further comprises a second routing module 16 to store information related a second assignment of a second plurality of specific routes to services to a second plurality of source identifiers, based on information related to a second plurality of current assignments between the second plurality of specific routes to services to the second plurality of source identifiers.

In at least some embodiments, a specific source identifier might be either comprised in the first plurality of source identifiers or the second plurality of source identifiers. In some embodiments, the first plurality of specific routes and the second plurality of specific routes may partly overlap.

In embodiments, the first and/or second routing modules 14, 16 may comprise a routing table, a lookup table, one or more routing functions, or one or more hashing functions etc. In embodiments, the first and second routing modules 14, 16 may be implemented using one or more processing units, one or more processing devices, any means for processing, such as a processor, a computer or a programmable hardware component being operable with accordingly adapted software. In other words, the described functions of the first and second routing modules 14, 16 may as well be implemented in software, which is then executed on one or more programmable hardware components. Such hardware components may comprise a general purpose processor, a Digital Signal Processor (DSP), a micro-controller, etc.

In at least some embodiments, a state of the network 300 may comprise at least one element of the group of information related to a network topology of the network 300, information related to an availability/unavailability of servers providing the service 100, or information related to a service capacity of servers providing the service 100.
The information related to the second plurality of the current assignments may be based on information related to a current state of the network 300, and the information related to the first plurality of the previous assignments may based on information related to one or more previous states of the network 300.

The apparatus 10 further comprises a control module 18 to control the first and second routing modules 14, 16. The control module 18 is further configured to obtain, from the first routing module 14, the information related to the specific route to the service 100, if the first routing module 14 comprises the information related to the specific route to the service 100, and, in case the first routing module 14 does not comprise the information related to the specific route to the service 100, to obtain, from the second routing module 16, the information related to the specific route to the service 100, if the second routing module 16 comprises the information related to the specific route to the service 100.

In some embodiments, the control module 18 may be further configured to, if the first 14 and second 16 routing modules do not comprise the information related to the specific route to the service, provide the second routing module 16 with information related to an assignment of the specific route to the service 100 based on the information related to the source identifier.

In some embodiments, the information related to the specific route to the service may be based on a routing table, which assign the information related to the specific route to the service to a source identifier. The information related to the assignment of the specific route to the service may correspond to an entry in such a routing table. In other embodiments, such assignment may be carried out by means of a function, for example a hashing function. The information related to the assignment of the specific route to the service, based on the information related to the source identifier, may correspond to information related to a, function, for example a hashing function, based on the information related to the source identifier. In some embodiments, such function may also be based on the state of the network 300.

In various embodiments, the control module 18 may be further configured to invalidate and/or remove an information related to a first and/or second assignment from the first 14 or second 16 routing modules if a last service request associated with the source identifier is received. The control module 18 may, in embodiments, further be configured to delay the invalidation and/or removing of the information related to a first and/or second assignment for a time interval after the last service request associated with the source identifier is received. In some embodiments, such service request may cover any packet of a TCP/IP (Transmission Control Protocol/Internet Protocol) sequence that flows in the direction of preceding packets with the same signature (e.g., source and destination IP address, TCP source port and destination port, and/or source identifier and service).

A time interval may correspond to a specified length of time, a specified number of processing cycles, a specified number of requests, a time interval until an entry removing/invalidating function runs, a time interval until a memory clearing function runs etc.

In some embodiments, the control module 18 may be further configured to transfer the information related to the second assignment from the second routing module 16 to the first routing module 14. In various embodiments, the control module 18 may be further configured to transfer the information related to the second assignment from the second routing module 16 to the first routing module 14 in case the state of the network 300 changes. In at least some embodiments, the information related to the second assignment may be converted for the first routing module 14, e.g. by, in embodiments, converting information related to a routing function to information for a routing table etc.

In various embodiments, the control module 18 may be further configured to clear the information related to the second assignment from the second routing module 16 in case the state of the network 300 changes.

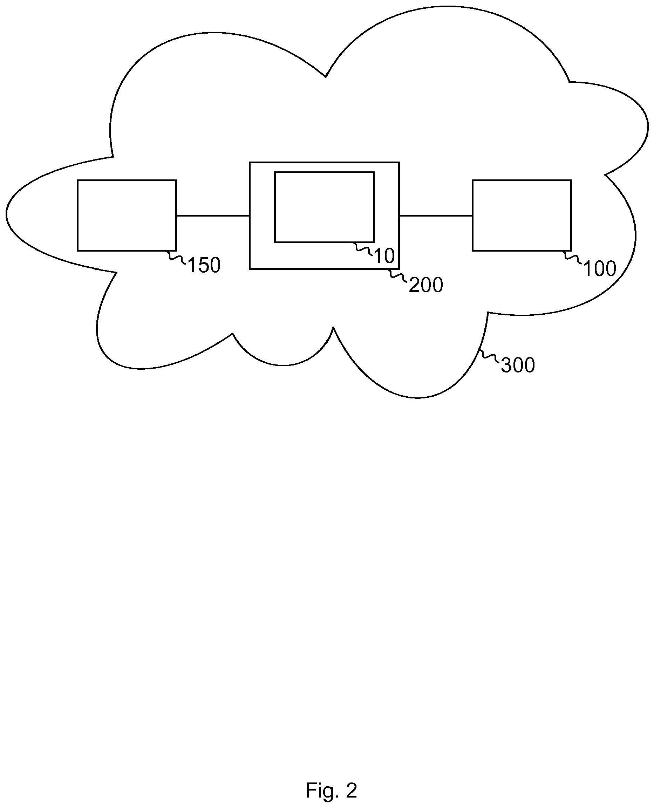

Fig 2 illustrates a block diagram of an embodiment of a network gateway 200 comprising an apparatus 10 for providing information related to a specific route to a service 100 in a network 300. Fig. 2 further shows one or more service clients 150 and the service 100. The network gateway is coupled to the one or more service clients 150 and to the service 100.

Embodiments further provide a network gateway 200 comprising an apparatus 10 for providing information related to a specific route to a service 100 in a network 300. The network gateway 200 is configured forward the service request from the one or more service clients 150 to a server providing the service 100 based on the information related to the specific route to a service 100.

In embodiments, the network gateway 200 may also correspond to a router, a switch, a proxy server, a network entity for connecting at least two networks, a software defined networking gateway etc.

In some embodiments, the network gateway 200 may further be configured to modify the request from the one or more service clients 150, based on the information related to a specific route to a service 100. In some embodiments, the network gateway 200 may further provide Network Address Translation (NAT).

In various embodiments, the apparatus 10 may be comprised in the core routers of a cloud data center (DC). An arbitrary service may be deployed on the cloud infrastructure and made reachable externally by its service identifier, i.e., its virtual address. Virtual addresses may be commonly used as a preferred mechanism for dynamic scaling of a services (adding and deleting instances), for optimizing resource utilization and performance (migrating instances), and dealing with failures in a transparent manner. This may be supported by many forwarding nodes such that they have encapsulation capabilities.

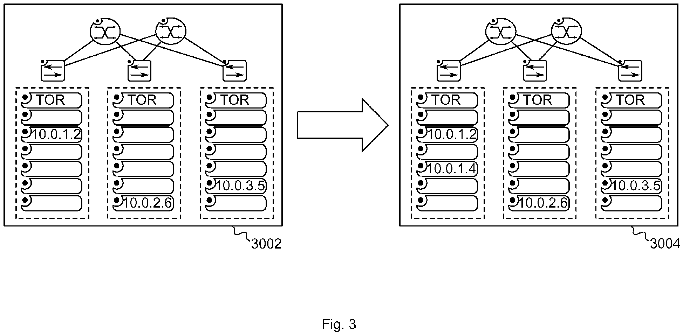

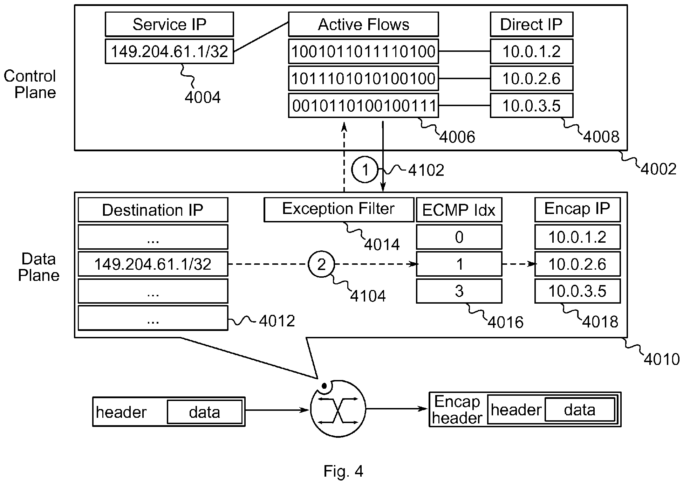

Figure 3 illustrates a block diagram of an embodiment. On the left side, 3002, initially there are three instances of a service deployed on hosts in different racks of the DC, each allocated a unique direct IP in the private address space (10.0.1.2, 10.0.2.6, 10.0.3.5). The availability of the three instances for the particular service may be configured in the control plane 4002 either manually using a management interface or through a dedicated control protocol such as routing announcements. The control plane may translate this into routing information for the data plane 4010 including the direct IPs 4008 that map to the service IP 4004, as well as a compact representation of active flows 4006 per path, as shown in Figure 4. This data structure may be looked up and modified whenever a flow is added or deleted; it may have lower performance requirements than the per-packet lookup operations in the data path, thus, may be implemented in larger and less expensive memory. In contrast, for the data path, embodiments may use Bloom filters for a compact representation of the active flows, which may be considered to have low space and computation requirements and may allow fast membership lookups. Moreover, the space and computational requirements of a Bloom filter may be tunable; they may be traded for a higher false-positive rate. Without loss of generality, in the following figures of embodiments, the compact representation that the control plane is pushing into the data plane is shown to provide a better overview.

After the initial configuration, in embodiments, the control plane may monitor 4102 the data plane 4010 and update the active-flow table 4006 as packets for the service may be handled by a forwarder. In the data plane, there are no exception in the exception filter 4014 yet, thus, the packet may be processed and dispatched using a default ECMP procedure 4104. Fig. 4 further shows the destination IP address 4012, the ECMP index 4016 and the corresponding encapsulating IP address 4018 for use in the encapsulation header.

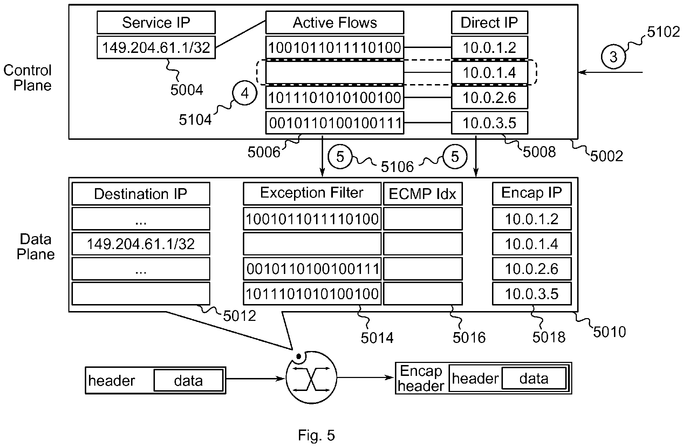

When a scale-out event is triggered by the operator of the service or by an auto-scaling function of the cloud orchestration layer, a fourth instance may be added (10.0.1.4) to the service, as depicted in Figure 3 3004. This event may be configured manually or signaled using control plane protocols as shown in Figure 5 5102. The control plane 5002 may subsequently add 5104 the corresponding entries into its data structures 5006, and may concurrently push 5106 the Bloom filters for the active flows 5006 into exception table 5014 of the data plane 5010 and may configure the new ECMP 5016 and corresponding encapsulation IP address entries 5018 in the data plane 5010. Finally, the control 5002 plane may flush its active flow entries and start a new cycle of monitoring and updating active flow entries 5006. Fig. 5 further shows the service IP addresses 5004, the direct IP addresses 5008 corresponding to the active flows 5006, and the destination IP addresses 5012.

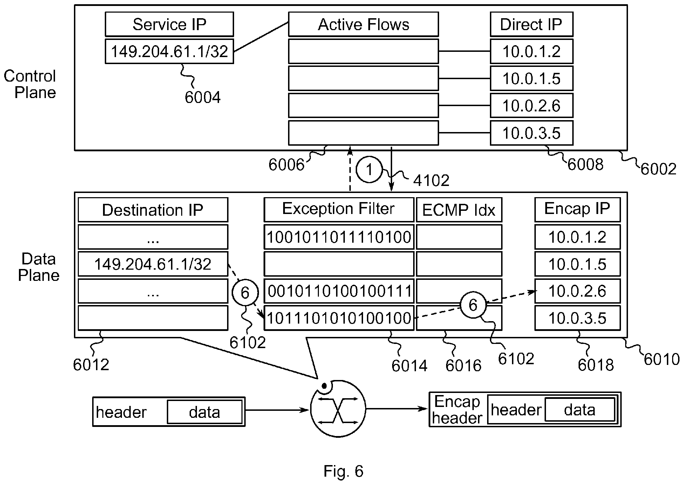

Figure 6 shows the states of embodiments immediately after the described reconfiguration event. The active flow table 6006 in the control plane 6002 may be empty since yet no packet may have been forwarded according to a new ECMP configuration. For any subsequent packet destined to the service, the forwarder may calculate the flow signature of the packet and may check its membership in the exception filter 6014 of the data plane 6010. In embodiments as shown in Figure 6 6102, the packet may belong to a flow that may have been active in the previous epoch and not terminated yet. Thus, there may be a matching entry in the destination IP table 5012 and the forwarder may choose to send the packet to the instance mapped by the exception filter 6014 to the ECMP index 6016 and the encapsulation IP table 6018 and skip the ECMP lookup. Fig. 6 further shows the service IP 6004 and the direct IP addresses 6008 corresponding to the active flows 6006.

In embodiments, the control plane may make a shadow copy of the previously active flows before it flushes the active flow entries in Figure 5. In embodiments, this data structure may be updated by the control plane whenever one of the flows active in the previous epoch terminates, and may trigger an update of the exception table (Fig. 4 & 6, 4102). In between reconfiguration events, the entries in the exception table may be updated and cover fewer flows with each update. Assuming a reasonable finite lifetimes of the flows covered by the exception table and no intermediate reconfiguration events, the entries in the exception table may become empty (i.e., all 0's in the Bloom filters) and therefore inactive. Eventually, the system may converge to a state similar to the initial state depicted in Figure 4.

In some embodiments, a SDN architecture with a control plane logically centralized for a set of forwarding nodes on a server may be assumed. The instructions and information flow as indicated in Fig. 2-4 may be implemented using a protocol, e.g., OpenFlow.

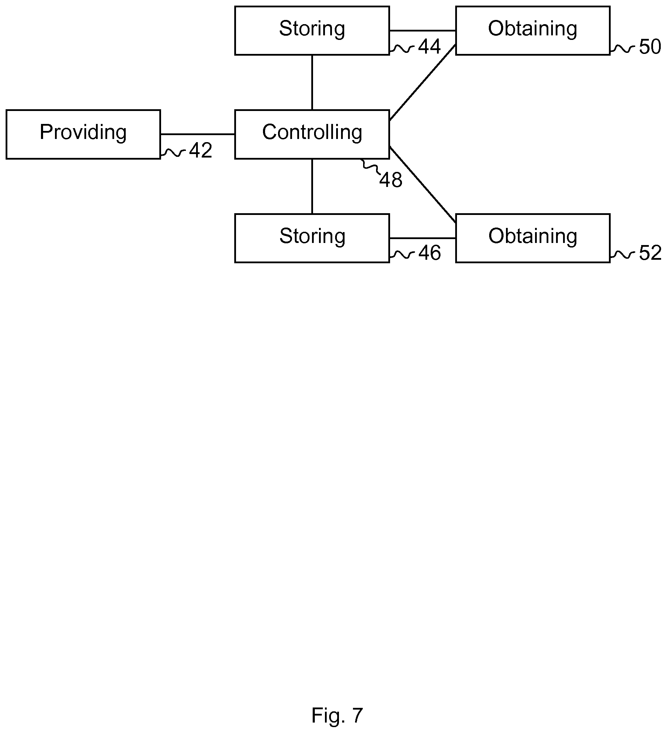

Fig. 7 illustrates a block diagram of a flow chart of an embodiment of a method for providing information related to a specific route to a service 100 in a network 300, based on a service request from one or more service clients 150. The method comprises providing 42 information related to a source identifier, based on information related to the service request of at least one of the one or more service clients 150. The method further comprises storing 44 information related to a first assignment of a first plurality of specific routes to services to a first plurality of source identifiers, based on information related to a first plurality of previous assignments between the first plurality of specific routes to services to the first plurality of source identifiers and storing 46 information related a second assignment of a second plurality of specific routes to services to a second plurality of source identifiers, based on information related to a second plurality of current assignments between the second plurality of specific routes to services to the second plurality of source identifiers. The method further comprises controlling 48 the first and second routing modules 14, 16, obtaining 50, from the first routing module 14, the information related to the specific route to the service 100, if the first routing module 14 comprises the information related to the specific route to the service 100, and obtaining 52, in case the first routing module 14 does not comprise the information related to the specific route to the service 100, from the second routing module 16, the information related to the specific route to the service 100, if the second routing module 16 comprises the information related to the specific route to the service 100.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer, a digital processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers. Herein, some embodiments are also intended to cover program storage devices, e.g., digital data storage media, which are ma-chine or computer readable and encode machine-executable or computer-executable pro-grams of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", "means for transceiving", "means for processing", etc., may be provided through the use of dedicated hardware, such as "a controller", "a transmitter", "a receiver", "a transceiver", "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. An apparatus (10) for providing information related to a specific route to a service (100) in a network (300), based on a service request from one or more service clients (150), the apparatus (10) comprising
a computation module (12) configured to provide information related to a source identifier, based on information related to the service request of at least one of the one or more service clients (150);
a first routing module (14) configured to store information related to a first assignment of a first plurality of specific routes to services to a first plurality of source identifiers, based on information related to a first plurality of previous assignments between the first plurality of specific routes to services to the first plurality of source identifiers;
a second routing module (16) configured to store information related a second assignment of a second plurality of specific routes to services to a second plurality of source identifiers, based on information related to a second plurality of current assignments between the second plurality of specific routes to services to the second plurality of source identifiers; and
a control module (18) configured to control the first and second routing modules (14, 16), and to obtain, from the first routing module (14), the information related to the specific route to the service (100) based on the information related to the source identifier, if the first routing module (14) comprises the information related to the specific route to the service (100), and, in case the first routing module (14) does not comprise the information related to the specific route to the service (100), to obtain, from the second routing module (16), the information related to the specific route to the service (100) based on the information related to the source identifier, if the second routing module (16) comprises the information related to the specific route to the service (100),
wherein the network (300) has a state, wherein the information related to the second plurality of the current assignments is based on information related to a current state of the network (300), wherein the information related to the first plurality of the previous assignments is based on information related to one or more previous states of the network (300),
wherein the control module (18) is further configured to transfer the information related to the second assignment from the second routing module (16) to the first routing module (14) in case the state of the network (300) changes.

2. The apparatus (10) of claim 1, wherein the control module (18) is further configured to, if the first (14) and second (16) routing modules do not comprise the information related to the specific route to the service, provide the second routing module (16) with information related to an assignment of the specific route to the service (100) based on the information related to the source identifier.

3. The apparatus (10) of claim 1, wherein the state of the network (300) comprises at least one element of the group of information related to a network topology of the network (300), information related to an availability/unavailability of servers providing the service (100), or information related to a service capacity of servers providing the service (100).

4. The apparatus (10) of claim 1, wherein the information related to the specific route to the service (100) comprises information related to at least one element of the group of one or more Internet Protocol, IP, addresses of a server providing the service (100), one or more IP addresses of one or more gateways in the network (300), one or more transmission channels, or one or more ports of a server providing the service (100), and/or wherein the first plurality of specific routes and the second plurality of specific routes partly overlap.

5. The apparatus (10) of claim 1, wherein the information related to the specific route to the service (100) is based on at least one element of the group of information related to a location of a server providing the service (100), information related to a network topography of the network (300) comprising at least one server providing the service (100), information related to a set of possible routes to a service (100), information related to a set of network loads of at least one route to a service (100), information related to a set of processing loads of at least one server providing the service (100).

6. The apparatus (10) of claim 1, wherein the information related to the source identifier comprises information related to at least one element of the group of a source address, a hash value of a source address, a device identifier, a hash value of a device identifier, a client configuration, a maximum transmission capacity, and/or wherein a specific source identifier is either comprised in the first plurality of source identifiers or the second plurality of source identifiers.

7. The apparatus (10) of claim 1, wherein the control module (18) is further configured to invalidate and/or remove an information related to a first and/or second assignment from the first (14) or second (16) routing modules if a last service request associated with the source identifier is received.

8. The apparatus (10) of claim 7, wherein the control module (18) is further configured to delay the invalidation and/or removing of the information related to a first and/or second assignment for a time interval after the last service request associated with the source identifier is received.

9. The apparatus (10) of claim 1, wherein the control module (18) is further configured to clear the information related to the second assignment from the second routing module (16) in case the state of the network (300) changes.

10. A network gateway (200) in a network (300) comprising an apparatus (10) according to claim 1, wherein the network gateway (200) is configured to forward the service request from the one or more service clients (150) to a server providing the service (100) based on the information related to the specific route to a service (100).

11. The network gateway (200) of claim 10, wherein the network gateway (200) is further configured to modify the request from the one or more service clients (150), based on the information related to a specific route to a service (100).

12. A method for providing information related to a specific route to a service (100) in a network (300), based on a service request from one or more service clients (150), the method comprising
providing (42) information related to a source identifier, based on information related to the service request of at least one of the one or more service clients (150);
storing (44) information related to a first assignment of a first plurality of specific routes to services to a first plurality of source identifiers, based on information related to a first plurality of previous assignments between the first plurality of specific routes to services to the first plurality of source identifiers;
storing (46) information related a second assignment of a second plurality of specific routes to services to a second plurality of source identifiers, based on information related to a second plurality of current assignments between the second plurality of specific routes to services to the second plurality of source identifiers; and
controlling (48) first and second routing modules (14, 16);
obtaining (50), from the first routing module (14), the information related to the specific route to the service (100) based on the information related to the source identifier, if the first routing module (14) comprises the information related to the specific route to the service (100); and
obtaining (52), in case the first routing module (14) does not comprise the information related to the specific route to the service (100), from the second routing module (16), the information related to the specific route to the service (100) based on the information related to the source identifier, if the second routing module (16) comprises the information related to the specific route to the service (100).
wherein the network (300) has a state, wherein the information related to the second plurality of the current assignments is based on information related to a current state of the network (300), wherein the information related to the first plurality of the previous assignments is based on information related to one or more previous states of the network (300),
transferring (54) the information related to the second assignment from the second routing module (16) to the first routing module (14) in case the state of the network (300) changes.

13. A computer program having a program code for performing the method of claim 12, when the computer program is executed on a computer, a processor, or a programmable hardware component.

## Patentansprüche

1. Vorrichtung (10) zur Bereitstellung von Informationen zu einer bestimmten Route zu einem Dienst (100) in einem Netz (300) aufgrund einer von einem oder mehreren Dienstleistungskunden (150) eingebrachten Dienstanfrage; eine Vorrichtung (10) bestehend aus
einem Rechenmodul (12), dazu konfiguriert,
mittels der mit der Dienstanfrage von zumindest einem oder mehreren Dienstleistungskunden (150) verbundenen Information Informationen zu einer Absenderkennung bereitzustellen;
einem ersten Routing-Modul (14), dazu konfiguriert,
eine Information zu speichern, die mit einer ersten Zuweisung einer ersten Vielzahl bestimmter Routen zu Diensten verbunden ist und eine erste Vielzahl der Absenderkennungen aufgrund der Information versorgt, die mit der ersten Vielzahl früherer Zuweisungen zwischen der ersten Vielzahl bestimmter Routen zu Diensten zur Versorgung der ersten Vielzahl der Absenderkennungen in Verbindung steht;
einem zweiten Routing-Modul (16), dazu konfiguriert,
eine Information zu speichern, die mit einer zweiten Zuweisung einer zweiten Vielzahl bestimmter Routen verbunden ist und eine zweite Vielzahl der Absenderkennung aufgrund der Information versorgt, die mit der zweiten Vielzahl früherer Zuweisungen zwischen der zweiten Vielzahl bestimmter Routen zur Versorgung der zweiten Vielzahl der Absenderkennungen in Verbindung steht, und
einem Steuermodul (18), dazu konfiguriert,
die ersten und zweiten Routing-Module (14, 16) zu steuern und
vom ersten Routing-Modul (14) die Information bezüglich der bestimmten Route zum Dienst (100) aufgrund der Information hinsichtlich der Absenderkennung zu erhalten, wenn das erste Routing-Modul (14) die Information zur bestimmten Route zum Dienst (100) umfasst und, falls das erste Routing-Modul (14) nicht die Information zur bestimmten Route zum Dienst (100) umfasst, die Information vom zweiten Routing-Modul (16) einzuholen, die sich auf die bestimmte Route zum Dienst (100) aufgrund der mit der Absenderkennung verbundenen Information bezieht, wenn das zweite Routing-Modul (16) die Information hinsichtlich der bestimmten Route zum Dienst (100) umfasst,
wobei sich das Netz (300) in einem Zustand befindet, in dem die mit der zweiten Vielzahl der aktuellen Zuordnungen verbundene Information auf einer Information beruht, die sich auf einen aktuellen Zustand des Netzes (300) bezieht, in dem die Information hinsichtlich der ersten Vielzahl der früheren Zuordnungen auf einer Information beruht, die sich auf einen früheren Zustand oder mehrere frühere Zustände des Netzes (300) bezieht,
wobei das Steuermodul (18) weiterhin so konfiguriert ist, die Information zu übertragen, die sich auf die zweite Zuordnung vom zweiten Routing-Modul (16) zum ersten Routing-Modul (14) bezieht, falls sich der Zustand des Netzes (300) ändert.

2. Vorrichtung (10) nach Anspruch 1, wobei das Steuermodul (18) so konfiguriert ist, das zweite Routing-Modul (16) mit einer Information bezüglich einer Zuordnung der bestimmten Route zu einem Dienst (100) aufgrund der mit der Absenderkennung verbundenen Information zu versorgen, wenn das erste (14) und zweite (16) Routing-Modul nicht die Information bezüglich der bestimmten Route zum Dienst umfasst.

3. Vorrichtung (10) nach Anspruch 1, wobei der Zustand des Netzes (300) zumindest ein Element der Gruppe der Informationen umfasst, die sich auf die Netztopologie des Netzes (300) bezieht, also Informationen hinsichtlich der Verfügbarkeit/Nichtverfügbarkeit der Server, die den Dienst (100) bereitstellen, oder Informationen hinsichtlich einer Dienstkapazität zur Bereitstellung des Dienstes (100) der Server darstellt.

4. Vorrichtung (10) nach Anspruch 1, wobei die Information hinsichtlich der bestimmten Route zum Dienst (100) eine Information umfasst, die sich auf zumindest ein Element der Gruppe aus einer oder mehreren Internetprotokoll-(IP)-Adressen eines Servers, der den Dienst (100) ausführt, eine oder mehrere IP-Adressen einer oder mehrerer Gateways im Netz (300), einen oder mehrerer Übertragungskanäle oder einen oder mehrerer Ports eines Servers bezieht, der den Dienst (100) versorgt, und/oder in dem sich die erste Vielzahl bestimmter Routen und die zweite Vielzahl bestimmter Routen teilweise überlagern.

5. Vorrichtung (10) nach Anspruch 1, wobei die Information, die sich auf die bestimmte Route des Dienstes (100) bezieht, auf zumindest einem Element der Gruppe der Informationen beruht, die mit dem Ort eines den Dienst (100) ausführenden Servers, eine Information bezüglich der Netztopologie des Netzes (300), das zumindest einen Server umfasst, der den Dienst (100) bereitstellt, eine Information bezüglich eines Satzes möglicher Routen zu einem Dienst (100), eine Information bezüglich einer Gruppe von Netzlasten von zumindest einer Route zum Dienst (100), eine Information bezüglich eines Verarbeitungslastensatzes von zumindest einem, den Dienst (100) ausführenden Servers in Bezug steht.

6. Vorrichtung (10) nach Anspruch 1, wobei die Information bezüglich der Absenderkennung eine Information umfasst, die sich zumindest auf ein Element der Gruppe einer Ursprungsadresse, einen Hashwert einer Ursprungsadresse, einen Vorrichtungs-Identifikator, eine Kundenkonfiguration und eine maximale Übertragungskapazität bezieht und/oder wobei eine bestimmte Absenderkennung entweder in einer ersten Vielzahl von Absenderkennungen oder in einer zweiten Vielzahl von Absenderkennungen enthalten ist.

7. Vorrichtung (10) nach Anspruch 1, wobei das Steuermodul (18) so konfiguriert ist, eine mit der ersten und/oder zweiten Zuordnung von den ersten (14) oder zweiten (16) Routing-Modulen verbundene Information zu annullieren und/oder zu löschen, wenn eine letzte Dienstanfrage bezüglich der Absenderkennung eingegangen ist.

8. Vorrichtung (10) nach Anspruch 7, wobei das Steuermodul (18) weiterhin so konfiguriert ist, die mit der Annullierung und/oder Löschung der mit der ersten und/oder zweiten Zuordnung von den ersten oder zweiten Routing-Modulen verbundenen Information während eines Zeitraums nach dem Eingang der letzten, mit der Absenderkennung verbundenen Dienstanfrage zu verzögern.

9. Vorrichtung (10) nach Anspruch 1, wobei das Steuermodul (18) weiterhin so konfiguriert ist, die Information zu löschen, die sich auf die zweite Zuordnung vom zweiten Routing-Modul (16) bezieht, falls sich der Zustand des Netzes (300) ändert.

10. Netz-Gateway (200) in einem Netz (300), eine Vorrichtung (10) nach Anspruch 1 umfassend, wobei das Netz-Gateway (200) so konfiguriert ist, die Dienstanfrage von einem oder mehreren Dienstleistungskunden (150) an einen Server weiterzuleiten, der den Dienst (100) aufgrund der Information ausführt, die mit der bestimmten Route zu einem Dienst (100) in Verbindung steht.

11. Netz-Gateway (200) nach Anspruch 10, wobei das Netz-Gateway (200) so konfiguriert ist, die Anfrage von einem oder mehreren Dienstleistungskunden (150) aufgrund der Information zu ändern, die mit der bestimmten Route zu einem Dienst (100) in Verbindung steht.

12. Verfahren zur Bereitstellung von Informationen zu einer bestimmten Route zu einem Dienst (100) in einem Netz (300) aufgrund einer von einem oder mehreren Dienstleistungskunden (150) eingebrachten Dienstanfrage; das Verfahren umfasst
die Bereitstellung (42) der Information, die sich auf die aufgrund der mit der Dienstanfrage von zumindest einem oder mehreren Dienstleistungskunden (150) verbundene Information bezieht;
die Speicherung (44) einer Information, die mit einer ersten Zuweisung einer ersten Vielzahl einer bestimmten Route verbunden ist und eine erste Vielzahl der Absenderkennungen aufgrund der Informationen versorgt, die mit der ersten Vielzahl früherer Zuweisungen zwischen der ersten Vielzahl bestimmter Routen zur Versorgung der ersten Vielzahl der Absenderkennungen in Verbindung steht;
die Speicherung (46) einer Information, die mit einer zweiten Zuweisung einer zweiten Vielzahl bestimmter Routen verbunden ist und eine zweite Vielzahl der Absenderkennung aufgrund der Information versorgt, die mit der zweiten Vielzahl früherer Zuweisungen zwischen der zweiten Vielzahl bestimmter Routen zur Versorgung der zweiten Vielzahl der Absenderkennungen in Verbindung steht, und
die Steuerung (48) der ersten und zweiten Routing-Module (14, 16);
die Beschaffung (50) der Information des ersten Routing-Moduls (14), die mit der bestimmten Route zum Dienst (100) in Verbindung steht und auf der Information beruht, die mit der Absenderkennung verbunden ist, wenn das erste Routing-Modul (14) die Information bezüglich der bestimmten Route zum Dienst (100) umfasst, und die Beschaffung (52) der Information zur bestimmten Route zum Dienst (100), die vom zweiten Routing-Modul (16) kommt und die Information bezüglich der Absenderkennung umfasst, wenn das zweite Routing-Modul (16) die Information hinsichtlich der bestimmten Route zum Dienst (100) umfasst, falls das erste Routing-Modul (14) nicht die Information bezüglich der bestimmten Route zum Dienst (100) beinhaltet,
wobei sich das Netz (300) in einem Zustand befindet, in dem die mit der zweiten Vielzahl der aktuellen Zuordnungen verbundene Information auf einer Information beruht, die sich auf einen aktuellen Zustand des Netzes (300) bezieht, in dem die Information hinsichtlich der ersten Vielzahl der früheren Zuordnungen auf einer Information beruht, die sich auf einen früheren Zustand oder mehrere frühere Zustände des Netzes (300) bezieht,
die Übertragung (54) der Information, die sich auf die zweite Zuordnung vom zweiten Routing-Modul (16) zum ersten Routing-Modul (14) bezieht, falls sich der Zustand des Netzes (300) ändert.

13. Computerprogramm mit Programmcode zur Ausführung des Verfahrens nach Anspruch 12, wenn das Computerprogramm auf einem Computer, einem Prozessor oder einer programmierbaren Hardware-Komponente läuft.

## Revendications

1. Appareil (10) destiné à fournir des informations se rapportant à une route spécifique vers un service (100) dans un réseau (300), en se basant sur une demande de service de la part d'un ou plusieurs clients du service (150), l'appareil (10) comprenant
un module de calcul informatisé (12) configuré pour
fournir des informations se rapportant à un identificateur de source, en se basant sur des informations se rapportant à la demande de service d'au moins l'un parmi l'un ou les plusieurs clients du service (150) ;
un premier module de routage (14) configuré pour
stocker des informations se rapportant à une première affectation d'une première pluralité de routes spécifiques vers des services à une première pluralité d'identificateurs de source, en se basant sur des informations se rapportant à une première pluralité d'affectations précédentes entre la première pluralité de routes spécifiques vers des services à la première pluralité d'identificateurs de source ;
un deuxième module de routage (16) configuré pour
stocker des informations se rapportant à une deuxième affectation d'une deuxième pluralité de routes spécifiques vers des services à une deuxième pluralité d'identificateurs de source, en se basant sur des informations se rapportant à une deuxième pluralité d'affectations actuelles entre la deuxième pluralité de routes spécifiques vers des services à la deuxième pluralité d'identificateurs de source ; et
un module de commande (18) configuré pour
commander les premier et deuxième modules de routage (14, 16), et pour obtenir, de la part du premier module de routage (14), les informations se rapportant à la route spécifique vers le service (100) en se basant sur les informations se rapportant à l'identificateur de la source, si le premier module de routage (14) comprend les informations se rapportant à la route spécifique vers le service (100), et, dans le cas où le premier module de routage (14) ne comprend pas les informations se rapportant à la route spécifique vers le service (100), pour obtenir, de la part du deuxième module de routage (16), les informations se rapportant à la route spécifique vers le service (100) en se basant sur les informations se rapportant à l'identificateur de la source, si le deuxième module de routage (16) comprend les informations se rapportant à la route spécifique vers le service (100), le réseau (300) présentant un état, les informations se rapportant à la deuxième pluralité des affectations actuelles étant basées sur des informations se rapportant à un état actuel du réseau (300), les informations se rapportant à la première pluralité des affectations précédentes étant basées sur des informations se rapportant à un ou plusieurs états précédents du réseau (300),
le module de commande (18) étant en outre configuré pour transférer les informations se rapportant à la deuxième affectation du deuxième module de routage (16) au premier module de routage (14) dans le cas où l'état du réseau (300) change.

2. Appareil (10) selon la revendication 1, le module de commande (18) étant en outre configuré pour, si les premier (14) et deuxième (16) modules de routage ne comprennent pas les informations se rapportant à la route spécifique vers le service, fournir au deuxième module de routage (16) des informations se rapportant à une affectation de la route spécifique vers le service (100) en se basant sur les informations se rapportant à l'identificateur de source.

3. Appareil (10) selon la revendication 1, l'état du réseau (300) comprenant au moins un élément du groupe d'informations se rapportant à une topologie de réseau du réseau (300), d'informations se rapportant à une disponibilité / indisponibilité des serveurs qui fournissent le service (100) ou d'informations se rapportant à une capacité de service des serveurs qui fournissent le service (100).

4. Appareil (10) selon la revendication 1, les informations se rapportant à la route spécifique vers le service (100) comprenant des informations se rapportant à au moins un élément du groupe composé d'une ou plusieurs adresses de protocole Internet, IP, d'un serveur qui fournit le service (100), une ou plusieurs adresses IP d'une ou plusieurs passerelles dans le réseau (300), un ou plusieurs canaux de transmission, un ou plusieurs ports d'un serveur qui fournit le service (100), et/ou la première pluralité de routes spécifiques et la deuxième pluralité de routes spécifiques se chevauchant partiellement.

5. Appareil (10) selon la revendication 1, les informations se rapportant à la route spécifique vers le service (100) étant basées sur au moins un élément du groupe d'informations se rapportant à un emplacement d'un serveur qui fournit le service (100), d'informations se rapportant à une topographie de réseau du réseau (300) comprenant au moins un serveur qui fournit le service (100), d'informations se rapportant à un ensemble de routes possibles vers un service (100), d'informations se rapportant à un ensemble de charges de réseau d'au moins une route vers un service (100), d'informations se rapportant à un ensemble de charges de traitement d'au moins un serveur qui fournit le service (100).

6. Appareil (10) selon la revendication 1, les informations se rapportant à l'identificateur de source comprenant des informations se rapportant à au moins un élément du groupe composé d'une adresse de source, d'une valeur de hachage d'une adresse de source, d'un identificateur de dispositif, d'une valeur de hachage d'un identificateur de dispositif, d'une configuration de client, d'une capacité de transmission maximale, et/ou un identificateur de source spécifique étant soit inclus dans la première pluralité d'identificateurs de source, soit dans la deuxième pluralité d'identificateurs de source.

7. Appareil (10) selon la revendication 1, le module de commande (18) étant en outre configuré pour invalider et/ou supprimer une information se rapportant à une première et/ou une deuxième affectation du premier (14) ou du deuxième (16) module de routage si au moins une demande de service associée à l'identificateur de source est reçue.

8. Appareil (10) selon la revendication 7, le module de commande (18) étant en outre configuré pour retarder l'invalidation et/ou la suppression de l'information se rapportant à une première et/ou une deuxième affectation pendant un intervalle de temps après la réception de la dernière demande de service associée à l'identificateur de source.

9. Appareil (10) selon la revendication 1, le module de commande (18) étant en outre configuré pour effacer l'information se rapportant à la deuxième affectation du deuxième module de routage (16) dans le cas où l'état du réseau (300) change.

10. Passerelle de réseau (200) dans un réseau (300) comprenant un appareil (10) selon la revendication 1, la passerelle de réseau (200) étant configurée pour transférer la demande de service de la part de l'un ou des plusieurs clients du service (150) à un serveur qui fournit le service (100) en se basant sur les informations se rapportant à route spécifique vers un service (100).

11. Passerelle de réseau (200) selon la revendication 10, la passerelle de réseau (200) étant en outre configurée pour modifier la demande de la part de l'un ou des plusieurs clients du service (150) en se basant sur les informations se rapportant à une route spécifique vers un service (100).

12. Procédé de fourniture d'informations se rapportant à une route spécifique vers un service (100) dans un réseau (300), en se basant sur une demande de service de la part d'un ou plusieurs clients du service (150), le procédé comprenant
fournir (42) des informations se rapportant à un identificateur de source, en se basant sur des informations se rapportant à la demande de service d'au moins l'un parmi l'un ou les plusieurs clients du service (150) ;
stocker (44) des informations se rapportant à une première affectation d'une première pluralité de routes spécifiques vers des services à une première pluralité d'identificateurs de source, en se basant sur des informations se rapportant à une première pluralité d'affectations précédentes entre la première pluralité de routes spécifiques vers des services à la première pluralité d'identificateurs de source ;
stocker (46) des informations se rapportant à une deuxième affectation d'une deuxième pluralité de routes spécifiques vers des services à une deuxième pluralité d'identificateurs de source, en se basant sur des informations se rapportant à une deuxième pluralité d'affectations actuelles entre la deuxième pluralité de routes spécifiques vers des services à la deuxième pluralité d'identificateurs de source ; et
commander (48) des premier et deuxième modules de routage (14, 16) ;
obtenir (50), de la part du premier module de routage (14), les informations se rapportant à la route spécifique vers le service (100) en se basant sur les informations se rapportant à l'identificateur de la source, si le premier module de routage (14) comprend les informations se rapportant à la route spécifique vers le service (100), et,
obtenir (52), dans le cas où le premier module de routage (14) ne comprend pas les informations se rapportant à la route spécifique vers le service (100), de la part du deuxième module de routage (16), les informations se rapportant à la route spécifique vers le service (100) en se basant sur les informations se rapportant à l'identificateur de la source, si le deuxième module de routage (16) comprend les informations se rapportant à la route spécifique vers le service (100),
le réseau (300) présentant un état, les informations se rapportant à la deuxième pluralité des affectations actuelles étant basées sur des informations se rapportant à un état actuel du réseau (300), les informations se rapportant à la première pluralité des affectations précédentes étant basées sur des informations se rapportant à un ou plusieurs états précédents du réseau (300),
transférer (54) les informations se rapportant à la deuxième affectation du deuxième module de routage (16) au premier module de routage (14) dans le cas où l'état du réseau (300) change.

13. Programme informatique comprenant un code de programme pour mettre en oeuvre le procédé selon la revendication 12, lorsque le programme informatique est exécuté sur un ordinateur, un processeur ou un composant matériel programmable.
